(19) Europäisches Patentamt / European Patent Office / Office européen des brevets

(11) **EP 4 730 155 A1**

(12) **EUROPEAN PATENT APPLICATION**
published in accordance with Art. 153(4) EPC

(43) Date of publication:
**22.04.2026 Bulletin 2026/17**

(51) International Patent Classification (IPC):
**G06F 16/36** (2019.01)

(21) Application number: **24822249.9**

(86) International application number:
**PCT/CN2024/077342**

(22) Date of filing: **18.02.2024**

(87) International publication number:
**WO 2024/255290 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 CN 202310718965**

(71) Applicant: **Huawei Technologies Co., Ltd.
Shenzhen, Guangdong 518129 (CN)**

(72) Inventors:
• **WANG, Xin**
  **Shenzhen, Guangdong 518129 (CN)**
• **SUN, Xiangkai**
  **Shenzhen, Guangdong 518129 (CN)**
• **TANG, Shuang**
  **Shenzhen, Guangdong 518129 (CN)**
• **SONG, Jing**
  **Shenzhen, Guangdong 518129 (CN)**

(74) Representative: **Isarpatent
Patent- und Rechtsanwälte PartG mbB
Friedrichstraße 31
80801 München (DE)**

(54) **METHOD FOR CONSTRUCTING FAULT KNOWLEDGE GRAPH, AND COMPUTING APPARATUS**

(57) A method for constructing a fault knowledge graph is provided. The method includes: after a to-be-processed sentence is obtained based on a fault determining text, determining protocol signaling and an atomic procedure of the to-be-processed sentence from an atomic procedure graph based on a signaling character string of the to-be-processed sentence; after an atomic procedure clause is generated based on the atomic procedure and the to-be-processed sentence, determining a logical expression corresponding to the atomic procedure clause; generating a logical expression of the to-be-processed sentence based on the logical expression of the atomic procedure clause; generating a logical expression of the fault determining text based on the logical expression of the to-be-processed sentence; and adding the logical expression of the fault determining text to a fault knowledge graph. According to the method, an atomic procedure graph can be searched for corresponding protocol signaling and a corresponding atomic procedure based on a signaling character string of a fault determining text, so that accuracy of recognizing signaling can be improved, and a success rate of converting the fault determining text into a logical expression is improved. This application further provides a computing apparatus that can implement the foregoing method.

Obtain a to-be-processed sentence based on a fault determining text — 701

Obtain a signaling character string of the to-be-processed sentence — 702

Determine protocol signaling of the to-be-processed sentence from an atomic procedure graph based on the signaling character string of the to-be-processed sentence — 703

Determine, from the atomic procedure graph, an atomic procedure to which the protocol signaling of the to-be-processed sentence belongs — 704

Generate at least one atomic procedure clause based on the atomic procedure and the to-be-processed sentence — 705

Determine a question template corresponding to the atomic procedure clause — 706

Generate a logical expression of the atomic procedure clause based on a logical expression template corresponding to the question template, protocol signaling corresponding to the atomic procedure clause, and a non-signaling entity of the atomic procedure clause — 707

Generate a logical expression of the to-be-processed sentence based on the logical expression of the at least one atomic procedure clause — 708

Generate a logical expression of the fault determining text based on the logical expression of the to-be-processed sentence — 709

Add the logical expression of the fault determining text to a fault knowledge graph — 710

FIG. 7

## Description

This application claims priority to Chinese Patent Application No. 202310718965.3, filed with the China National Intellectual Property Administration on June 16, 2023 and entitled "METHOD FOR CONSTRUCTING FAULT KNOWLEDGE GRAPH AND COMPUTING APPARATUS", which is incorporated herein by reference in its entirety.

## TECHNICAL FIELD

This application relates to the field of wireless communication, and in particular, to a method for constructing a fault knowledge graph and a computing apparatus.

## BACKGROUND

A fault document of a telecommunication network system records various fault symptoms, fault analysis and locating, and resolution processes.

Currently, a method for constructing a fault knowledge graph is roughly as follows: extracting an entity from a fault determining text based on an entity dictionary, and performing part-of-speech tagging and dependency syntax analysis on a sentence of the fault determining text; and generating a logical expression based on a parameter obtained through the part-of-speech tagging and a logical relationship obtained through the dependency syntax analysis, and forming the fault knowledge graph based on logical expressions of a large quantity of fault determining texts.

Because a large quantity of signaling in the fault determining text is written in a natural language, it is difficult to recognize non-standard signaling based on the entity dictionary. Consequently, a large quantity of fault determining texts cannot be converted into logical expressions.

## SUMMARY

In view of this, this application provides a method for constructing a fault knowledge graph, to search an atomic procedure graph for corresponding protocol signaling and a corresponding atomic procedure based on a signaling character string of a fault determining text, so that a success rate of recognizing the signaling character string can be improved, and a success rate of converting the fault determining text into a logical expression is improved. This application further provides a computing apparatus that can implement the foregoing method.

According to a first aspect, a method for constructing a fault knowledge graph is provided, and the method includes: after obtaining a to-be-processed sentence based on a fault determining text, obtaining a signaling character string of the to-be-processed sentence; determining protocol signaling of the to-be-processed sentence from an atomic procedure graph based on the signaling character string of the to-be-processed sentence, and determining, from the atomic procedure graph, an atomic procedure to which the protocol signaling of the to-be-processed sentence belongs; generating at least one atomic procedure clause based on the atomic procedure and the to-be-processed sentence; determining a question template corresponding to the atomic procedure clause; generating a logical expression of the atomic procedure clause based on a logical expression template corresponding to the question template, protocol signaling corresponding to the atomic procedure clause, and a non-signaling entity of the atomic procedure clause; generating a logical expression of the to-be-processed sentence based on the logical expression of the at least one atomic procedure clause; generating a logical expression of the fault determining text based on the logical expression of the to-be-processed sentence; and adding the logical expression of the fault determining text to a fault knowledge graph.

Based on this implementation, an atomic procedure graph can be searched for corresponding protocol signaling and a corresponding atomic procedure based on a signaling character string of the fault determining text. Because both the protocol signaling and the atomic procedure are standardized objects, a success rate of recognizing the signaling character string can be improved, and a success rate of converting the fault determining text into a logical expression is improved.

In a possible implementation of the first aspect, obtaining the to-be-processed sentence based on the fault determining text includes: when a sentence of the fault determining text does not include a logical operation keyword, using the sentence of the fault determining text as the to-be-processed sentence; or when the sentence of the fault determining text includes the logical operation keyword, determining a plurality of subjects in the sentence of the fault determining text based on the logical operation keyword, using a text obtained after the logical operation keyword and the plurality of subjects are removed from the sentence of the fault determining text as a common expression text, and generating one to-be-processed sentence based on the common expression text and each subject. In this way, a sentence including the logical operation keyword can be split and reassembled into a plurality of sentences, so that a case in which signaling of the to-be-processed sentence is inconsistent with signaling of the atomic procedure is reduced, and a success rate of recognizing the atomic procedure can be improved.

In another possible implementation of the first aspect, obtaining the signaling character string of the to-be-processed sentence includes: when the to-be-processed sentence includes a keyword in a preset word list, replacing the keyword in the preset word list with an English character string corresponding to the keyword; and extracting at least one candidate character string from a sentence obtained through replacement, and selecting a candidate character string including a preset signaling type as the signaling character string of the to-be-processed sentence. In this way, signaling written in Chinese can be converted into an English character string, and a quantity of recognizable signaling character strings is increased. Because lengths of all signaling character strings are greater than 2 and the signaling character string includes the preset signaling type (for example, ACK, REQ, REL, or RGNB), some character strings that do not belong to signaling can be removed based on the lengths of the character strings. This reduces calculation overheads for extracting the signaling character string.

Based on the foregoing possible implementation, in another possible implementation, the method for constructing a fault knowledge graph in this application further includes: before selecting the candidate character string including the preset signaling type as the signaling character string of the to-be-processed sentence, removing a target candidate character string from the at least one candidate character string. The target candidate character string includes one or more of a character string including "-", a character string starting with a digit, a standard name, a network element name, or a port name. Therefore, a character string that does not belong to signaling can be removed, calculation overheads of subsequent signaling matching are reduced, and efficiency of recognizing the signaling character string is improved.

In another possible implementation, determining the protocol signaling of the to-be-processed sentence from the atomic procedure graph based on the signaling character string of the to-be-processed sentence includes: after selecting a candidate protocol signaling set from the atomic procedure graph based on a signaling type of the signaling character string of the to-be-processed sentence, calculating a fuzzy matching score corresponding to the candidate protocol signaling based on a length of the signaling character string of the to-be-processed sentence, a length of the candidate protocol signaling, and an editing distance between the signaling character string of the to-be-processed sentence and the candidate protocol signaling; and determining the protocol signaling of the to-be-processed sentence based on candidate protocol signaling corresponding to a highest fuzzy matching score. The candidate protocol signaling set includes one or more pieces of candidate protocol signaling, and the protocol signaling is standard signaling in a 3GPP protocol. In this way, a method for searching for the protocol signaling based on the signaling character string is provided, which has high accuracy.

In another possible implementation, determining the protocol signaling of the to-be-processed sentence based on the candidate protocol signaling corresponding to the highest fuzzy matching score includes: when the highest fuzzy matching score corresponds to a plurality of pieces of candidate protocol signaling, selecting, according to a preset matching rule, one piece of candidate protocol signaling from the pieces of candidate protocol signaling with the highest fuzzy matching score as the protocol signaling of the to-be-processed sentence. The preset matching rule includes at least one of the following rules: an atomic procedure to which the signaling character string belongs is the same as an atomic procedure to which the candidate protocol signaling belongs, a signaling type of the signaling character string and a signaling type of the candidate protocol signaling respond to each other, and a port type of the signaling character string is the same as a port type of the candidate protocol signaling. When the highest fuzzy matching score corresponds to a plurality of pieces of candidate protocol signaling, accuracy of searching for the protocol signaling can be improved according to the preset matching rule.

In another possible implementation, determining the protocol signaling of to-be-processed signaling from the atomic procedure graph based on the signaling character string of the to-be-processed sentence includes: when a previous signaling character string of the signaling character string of the to-be-processed sentence matches first target protocol signaling, determining that the protocol signaling of the to-be-processed signaling is a next piece of protocol signaling of the first target protocol signaling in an atomic procedure to which the first target protocol signaling belongs. For a signaling character string (for example, ACK or REQ) that includes a part of signaling, the protocol signaling can be searched for based on the previous signaling character string, which improves a success rate of searching for the protocol signaling.

In another possible implementation, determining the protocol signaling of the to-be-processed signaling from the atomic procedure graph based on the signaling character string of the to-be-processed sentence includes: when a next signaling character string of the signaling character string of the to-be-processed sentence matches second target protocol signaling, determining that the protocol signaling of the to-be-processed sentence is a previous piece of protocol signaling of the second target protocol signaling in an atomic procedure to which the second target protocol signaling belongs. For a signaling character string (for example, ACK or REQ) that includes a part of signaling, the protocol signaling can be searched for based on the next signaling character string, which improves a success rate of searching for the protocol signaling.

In another possible implementation, the method for constructing a fault knowledge graph in this application further includes: when the previous signaling character string fails to match protocol signaling of the atomic procedure graph, and/or when the next signaling character string fails to match the protocol signaling of the atomic procedure graph, searching a text after the signaling character string of the to-be-processed sentence for a target signaling character string based on a signaling type of the signaling character string of the to-be-processed sentence; and when the target signaling character string matches third target protocol signaling, determining that the protocol signaling of the to-be-processed sentence is the third target protocol signaling. In this way, a success rate of searching for the protocol signaling can be improved.

In another possible implementation, determining the question template corresponding to the atomic procedure clause includes: replacing a signaling character string and the non-signaling entity in the atomic procedure clause with a mask character string, to obtain a query statement; after obtaining a candidate question template set corresponding to the atomic procedure, selecting a candidate question template subset from the candidate question template set based on a quantity of signaling of the query statement; calculating, for each candidate question template in the candidate question template subset, a fuzzy matching score between the candidate question template and the query statement; and determining that the question template corresponding to the atomic procedure clause is a candidate question template corresponding to a highest matching score. A quantity of signaling of each candidate question template in the candidate question template subset is the same as the quantity of signaling of the query statement. A mask character string of the query statement is the same as a signaling character string corresponding to the question template. This can improve a success rate of searching for the question template. The question template is searched for based on the fuzzy matching score, which has high accuracy.

In another possible implementation, generating the logical expression of the atomic procedure clause based on the logical expression template corresponding to the question template, the protocol signaling corresponding to the atomic procedure clause, and the non-signaling entity of the atomic procedure clause includes: filling the protocol signaling corresponding to the atomic procedure clause and the non-signaling entity of the atomic procedure clause into a slot of the logical expression template corresponding to the question template, to obtain the logical expression of the atomic procedure clause. This provides a specific method for generating the logical expression of the atomic procedure clause.

In another possible implementation, generating the logical expression of the to-be-processed sentence based on the logical expression of the at least one atomic procedure clause includes: when there are a plurality of atomic procedure clauses, obtaining an inter-sentence logical relationship between the plurality of atomic procedure clauses; and generating the logical expression of the to-be-processed sentence based on the inter-sentence logical relationship between the plurality of atomic procedure clauses and logical expressions of the plurality of atomic procedure clauses. The inter-sentence logical relationship between the plurality of atomic procedure clauses includes: AND and OR. In this way, the logical expressions of the plurality of atomic procedure clauses may be combined into the logical expression of the to-be-processed sentence based on the inter-sentence logical relationship between the plurality of atomic procedure clauses.

In another possible implementation, the method for constructing a fault knowledge graph in this application further includes: when the fault determining text includes a level identifier and a sentence of the fault determining text does not include a logical operation keyword, determining an inter-sentence logical relationship between all to-be-processed sentences based on the level identifier; when the fault determining text does not include a level identifier and a sentence of the fault determining text includes a logical operation keyword, determining an inter-sentence logical relationship between all to-be-processed sentences based on the logical operation keyword; or when the fault determining text includes a level identifier and a sentence of the fault determining text includes a logical operation keyword, determining an inter-sentence logical relationship between all to-be-processed sentences based on the level identifier and the logical operation keyword; and generating the logical expression of the fault determining text based on the inter-sentence logical relationship between all the to-be-processed sentences and the logical expression of the to-be-processed sentence.

When the fault determining text includes a sentence of a level structure and/or a sentence of a parallel structure, the inter-sentence logical relationship between the to-be-processed sentences may be obtained, and the logical expressions of the to-be-processed sentences are combined into the logical expression of the fault determining text based on the inter-sentence logical relationship between the to-be-processed sentences.

In another possible implementation, the method for constructing a fault knowledge graph in this application further includes: extracting an atomic procedure diagram from a protocol document; creating the atomic procedure graph based on the atomic procedure diagram of the protocol document, and obtaining a fault description sentence set from a fault document; obtaining a question template corresponding to each fault description sentence in the fault description sentence set; and when all signaling of a target question template belongs to a signaling set of a target atomic procedure, associating the target question template with an atomic procedure identifier of the target atomic procedure. The atomic procedure graph includes an atomic procedure identifier and a signaling set of the atomic procedure. The target question template is any question template. A correspondence between the question template and the atomic procedure may be established, and the question template corresponding to the atomic procedure may be automatically searched for based on the correspondence.

In another possible implementation, the method for constructing a fault knowledge graph in this application further includes: receiving a log sent by a network device; searching the fault knowledge graph for a target logical expression based on a signaling character string and a non-signaling entity that are included in the log; and determining, based on an output result of the target logical expression, whether the log includes a fault event. After the fault knowledge graph is constructed, fault detection can be automatically performed based on the fault knowledge graph. This improves a fault detection speed.

According to a second aspect, a computing apparatus is provided, including an obtaining module, a first matching module, a second matching module, and a generation module. The obtaining module is configured to: obtain a to-be-processed sentence based on a fault determining text, and obtain a signaling character string of the to-be-processed sentence. The first matching module is configured to determine protocol signaling of the to-be-processed sentence from an atomic procedure graph based on the signaling character string of the to-be-processed sentence. The second matching module is configured to: determine, from the atomic procedure graph, an atomic procedure to which the protocol signaling of the to-be-processed sentence belongs; generate at least one atomic procedure clause based on the atomic procedure and the to-be-processed sentence; and determine a question template corresponding to the atomic procedure clause. The generation module is configured to: generate a logical expression of the atomic procedure clause based on a logical expression template corresponding to the question template, protocol signaling corresponding to the atomic procedure clause, and a non-signaling entity of the atomic procedure clause; generate a logical expression of the to-be-processed sentence based on the logical expression of the at least one atomic procedure clause; generate a logical expression of the fault determining text based on the logical expression of the to-be-processed sentence; and add the logical expression of the fault determining text to a fault knowledge graph.

In a possible implementation, the obtaining module is specifically configured to: when a sentence of the fault determining text does not include a logical operation keyword, use the sentence of the fault determining text as the to-be-processed sentence; or when the sentence of the fault determining text includes the logical operation keyword, determine a plurality of subjects in the sentence of the fault determining text based on the logical operation keyword, and generate one to-be-processed sentence based on a common expression text and each subject.

In another possible implementation, the obtaining module is specifically configured to: when the to-be-processed sentence includes a keyword in a preset word list, replace the keyword in the preset word list with an English character string corresponding to the keyword; and extract at least one candidate character string from a sentence obtained through replacement, and select a candidate character string including a preset signaling type as the signaling character string of the to-be-processed sentence.

In another possible implementation, the obtaining module is further configured to remove a target candidate character string from the at least one candidate character string.

In another possible implementation, the first matching module is specifically configured to: select a candidate protocol signaling set from the atomic procedure graph based on a signaling type of the signaling character string of the to-be-processed sentence; calculate a fuzzy matching score corresponding to the candidate protocol signaling based on a length of the signaling character string of the to-be-processed sentence, a length of the candidate protocol signaling, and an editing distance between the signaling character string of the to-be-processed sentence and the candidate protocol signaling; and determine the protocol signaling of the to-be-processed sentence based on candidate protocol signaling corresponding to a highest fuzzy matching score.

In another possible implementation, the first matching module is specifically configured to: when the highest fuzzy matching score corresponds to a plurality of pieces of candidate protocol signaling, select, according to a preset matching rule, one piece of candidate protocol signaling from the pieces of candidate protocol signaling with the highest fuzzy matching score as the protocol signaling of the to-be-processed sentence.

In another possible implementation, the first matching module is specifically configured to: when a previous signaling character string of the signaling character string of the to-be-processed sentence matches first target protocol signaling, determine that the protocol signaling of to-be-processed signaling is a next piece of protocol signaling of the first target protocol signaling in an atomic procedure to which the first target protocol signaling belongs.

In another possible implementation, the first matching module is specifically configured to: when a next signaling character string of the signaling character string of the to-be-processed sentence matches second target protocol signaling, determine that the protocol signaling of the to-be-processed sentence is a previous piece of protocol signaling of the second target protocol signaling in an atomic procedure to which the second target protocol signaling belongs.

In another possible implementation, the first matching module is specifically configured to: when the previous signaling character string fails to match protocol signaling of the atomic procedure graph, and/or when the next signaling character string fails to match the protocol signaling of the atomic procedure graph, search a target text for a target signaling character string based on a signaling type of the signaling character string of the to-be-processed sentence; and when the target signaling character string matches third target protocol signaling, determine that the protocol signaling of the to-be-processed sentence is the third target protocol signaling.

In another possible implementation, the second matching module is specifically configured to: replace a signaling character string and the non-signaling entity in the atomic procedure clause with a mask character string, to obtain a query statement; obtain a candidate question template set corresponding to the atomic procedure; select a candidate question template subset from the candidate question template set based on a quantity of signaling of the query statement; calculate, for each candidate question template in the candidate question template subset, a fuzzy matching score between the candidate question template and the query statement; and determine that the question template corresponding to the atomic procedure clause is a candidate question template corresponding to a highest matching score.

In another possible implementation, the generation module is specifically configured to fill the protocol signaling corresponding to the atomic procedure clause and the non-signaling entity of the atomic procedure clause into a slot of the logical expression template corresponding to the question template, to obtain the logical expression of the atomic procedure clause.

In another possible implementation, the generation module is specifically configured to: when there are a plurality of atomic procedure clauses, obtain an inter-sentence logical relationship between the plurality of atomic procedure clauses; and generate the logical expression of the to-be-processed sentence based on the inter-sentence logical relationship between the plurality of atomic procedure clauses and logical expressions of the plurality of atomic procedure clauses.

In another possible implementation, the obtaining module is further configured to: when the fault determining text includes a level identifier and a sentence of the fault determining text does not include a logical operation keyword, determine an inter-sentence logical relationship between all to-be-processed sentences based on the level identifier; when the fault determining text does not include a level identifier and a sentence of the fault determining text includes a logical operation keyword, determine an inter-sentence logical relationship between all to-be-processed sentences based on the logical operation keyword; or when the fault determining text includes a level identifier and a sentence of the fault determining text includes a logical operation keyword, determine an inter-sentence logical relationship between all to-be-processed sentences based on the level identifier and the logical operation keyword; and the generation module is specifically configured to generate the logical expression of the fault determining text based on the inter-sentence logical relationship between all the to-be-processed sentences and the logical expression of the to-be-processed sentence.

In another possible implementation, the computing apparatus in this application further includes a first creation module, a second creation module, and an association module. The first creation module is configured to extract an atomic procedure diagram from a protocol document; and create the atomic procedure graph based on the atomic procedure diagram of the protocol document. The second creation module is configured to: obtain a fault description sentence set from a fault document; and obtain a question template corresponding to each fault description sentence in the fault description sentence set. The association module is configured to: when all signaling of a target question template belongs to a signaling set of a target atomic procedure, associate the target question template with an atomic procedure identifier of the target atomic procedure.

In another possible implementation, the computing apparatus in this application further includes a receiving module and a fault detection module. The receiving module is configured to receive a log sent by a network device. The fault detection module is configured to: search the fault knowledge graph for a target logical expression based on a signaling character string and a non-signaling entity that are included in the log; and determine, based on an output result of the target logical expression, whether the log includes a fault event.

For term explanations, steps performed by the modules, and beneficial effects in the second aspect, refer to corresponding descriptions in the first aspect.

According to a third aspect, a computing apparatus is provided, including a processor and an interface circuit, where the interface circuit is configured to receive a signal from another computing apparatus and transmit the signal to the processor, or send a signal from the processor to another computing apparatus, and the processor is configured to implement the method in the first aspect through a logic circuit or executing code instructions.

According to a fourth aspect, a computer-readable storage medium is provided, where the storage medium stores a computer program or instructions; and when the computer program or the instructions are executed by a computing apparatus, the method in the first aspect is implemented.

According to a fifth aspect, a computer program product including instructions is provided. When the computer program product runs on a computer, the computer is caused to perform the method in the first aspect.

According to a sixth aspect, a chip is provided. The chip includes a processor and a memory. The memory stores instructions. The processor is configured to execute the instructions stored in the memory. When the instructions are executed, the processor is configured to perform the method in the first aspect. The chip may be specifically a field programmable gate array (field programmable gate array, FPGA) or an application-specific integrated circuit (application-specific integrated circuit, ASIC).

## BRIEF DESCRIPTION OF DRAWINGS

FIG. 1 is a diagram of a scenario in which a fault knowledge graph is constructed according to an embodiment of this application;

FIG. 2 is a diagram of a fault detection scenario according to an embodiment of this application;

FIG. 3 is a diagram of constructing telecommunication knowledge middleware and generating a logical expression according to an embodiment of this application;

FIG. 4 is a diagram of an atomic procedure according to an embodiment of this application;

FIG. 5 is a diagram of a logical expression of a fault determining text according to an embodiment of this application;

FIG. 6 is a diagram of a question template according to an embodiment of this application;

FIG. 7 is a flowchart of a method for constructing a fault knowledge graph according to an embodiment of this application;

FIG. 8 is a diagram of sentence reassembling according to an embodiment of this application;

FIG. 9 is another diagram of sentence reassembling according to an embodiment of this application;

FIG. 10 is a diagram of converting an atomic procedure clause into a query statement according to an embodiment of this application;

FIG. 11 is a diagram of generating a logical expression of an atomic procedure clause according to an embodiment of this application;

FIG. 12 is a structural diagram of a computing apparatus according to an embodiment of this application; and

FIG. 13 is another structural diagram of a computing apparatus according to an embodiment of this application.

## DESCRIPTION OF EMBODIMENTS

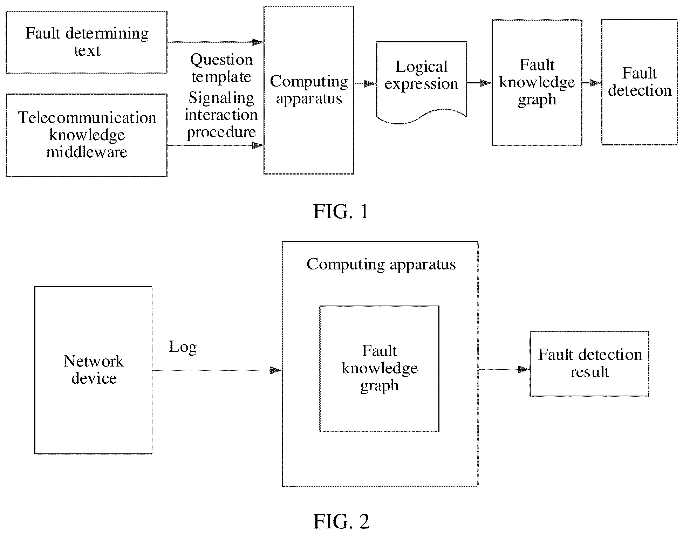

A method for constructing a fault knowledge graph in this application may be applied to a fault detection scenario based on a fault knowledge graph in a wireless communication system. The following describes a scenario in which a fault knowledge graph is constructed. Refer to FIG. 1. In an example, telecommunication knowledge middleware includes a question template and a signaling interaction procedure. After obtaining a fault determining text, the question template, and the signaling interaction procedure, a computing apparatus can generate a logical expression of the fault determining text based on the fault determining text, the question template, and the signaling interaction procedure, add the logical expression of the fault determining text to a fault knowledge graph, and perform fault detection based on the fault knowledge graph.

The fault determining text is a natural language text that describes a fault, for example, "4G does not receive ACK within 5s after initiating SGNB add req, and the 4G sends SNB rel req carrying a cause value tDCoverall-expiry".

The telecommunication knowledge middleware includes atomic procedure data and a question template of a 3rd generation partnership project (3rd generation partnership project, 3GPP) protocol. The atomic procedure data includes an atomic procedure, signaling of the atomic procedure, and the like. The atomic procedure is a minimum signaling interaction procedure that has complete and independent functions in a communication protocol. Generally, the atomic procedure includes one to three signaling interaction steps between two network elements.

The question template is a template generated according to a preset rule and can describe a fault symptom, for example, [fail to receive/not receive/not receiving] <SIG:ACK> within <TIME> after [send/sending/initiate] <SIG:REQ>. "/" represents OR. <SIG:REQ> represents REQ signaling, <SIG:ACK> represents ACK signaling, and <TIME> represents time.

A logical expression includes an operator and a named entity. The operator in this application includes but is not limited to an operator of a logical relationship between a parameter and a constant, an operator of a logical relationship between parameters, an operator of a logical operation relationship, and an operator of a numeric operation relationship.

In an example, the logical relationship between the parameter and the constant is shown in Table 1.

Table 1

| Relationship description | Operator | Example | Rule |
| --- | --- | --- | --- |
| Value comparison | ==\!=\>\>=\<\<= | Parameter 1==10 | If a value of the parameter 1 is equal to 10, an operation result is true |
| Include | Include\not_include | Parameter 1 include 10\|20 | If a value of the parameter 1 includes 10 or 20, an operation result is true |
| Included in | Includedin\not_includedin | Parameter 1 includedin 10\|20 | If a value of the parameter 1 is included in 10 or 20, an operation result is true |

In an example, the logical relationship between parameters is shown in Table 2:

Table 2

| Relationship description | Operator | Example | Rule |
|---|---|---|---|
| Value comparison | ==\!=\>\>=\<\<= | Parameter 1==parameter 2 (parameter 1, parameter 2) > (parameter 3, parameter 4) | If a value of the parameter 1 is the same as a value of the parameter 2, an operation result is true |
| Exist | exist\not_exist | exist (parameter 1) | If the parameter 1 exists in a log, an operation result is true |
| Include | Include\not_include | (Parameter 1, parameter 2) include (parameter 3, parameter 4) | If a value of the parameter 1 and a value of the parameter 2 completely include a value of the parameter 3 and a value of the parameter 4, an operation result is true |
| Included in | Includedin\not_includedin | (Parameter 1, parameter 2) includedin (parameter 3, parameter 4) | If a value of the parameter 1 and a value of the parameter 2 are completely included in a value of the parameter 3 and a value of the parameter 4, an operation result is true |
| Intersection | Intersection\not_intersection | intersection (parameter 1, parameter 2) | If a value of the parameter 1 intersects with a value of the parameter 2, an operation result is true |
| Time difference logic | time_diff | Time_diff (parameter 1, parameter 2) < 100 | If the parameter 2 appears within 100 ms after the parameter 1, an operation result is true |
| Time order logic | Order\not_order | Order (parameter 1, parameter 2) | If the parameter 2 exists after the parameter 1, an operation result is true |

In an example, numeric operation relationship characters are shown in Table 3:

Table 3

| Relationship description | Operator | Example | Rule |
|---|---|---|---|
| Maximum value | max | max (parameter 1) | Maximum value of the parameter 1 |
| Minimum value | min | Min (parameter 1) | Minimum value of the parameter 1 |
| Average value | average | Average (parameter 1) | Average value of the parameter 1 |
| Binary index | | Parameter 1 [parameter 2] | Use a value of the parameter 2 as an index, to take out a value at a corresponding location in a list of the parameter 1 |
| Triple index | | Parameter 1 [parameter 2.index (parameter 3)] | Use a location at which the parameter 2 is equal to the parameter 3 as an index, to take out a value at a corresponding location of the parameter 1 |
| Percent calculation | calculate_percent | calculate_percent (parameter 1) | Calculate statistics on percents of all values of the parameter 1 and return a highest percent |

In an example, the logical operation relationship is shown in Table 4:

Table 4

| Relationship description | Operator | Example | Rule |
| --- | --- | --- | --- |
| AND | And | expr1 and expr2 | If both expr1 and expr2 are true, an operation result is true |
| OR | Or | expr1 or expr2 | If one of expr1 and expr2 is true, an operation result is true |
| NOT | not | not expr1 | If expr1 is false, an operation result is true |

The named entity includes a parameter, a value, time, a digit, and the like. For example, a logical expression is: ((time(SGNB_ADD_REQ_ACK) - time(SGNB_ADD_REQ) > 5000) and (SGNB_REL_REQ:cause == tDCoverall-expiry). SGNB_ADD_REQ_ACK, SGNB_ADD_REQ, and SGNB_REL_REQ are signaling entities, time() represents a moment at which the signaling is obtained, 5000 represents 5000 microseconds (namely, 5 seconds), and tDCoverall-expiry represents a parameter. The named entity is an object identified by a proper noun, including a signaling name, a person name, a place name, and the like.

Refer to FIG. 2. A network device sends a log to a computing apparatus. The computing apparatus searches a fault knowledge graph for a corresponding logical expression based on signaling and a signaling parameter that are included in the log, and outputs a fault detection result based on the found logical expression.

A procedure of constructing telecommunication knowledge middleware includes a procedure of constructing an atomic procedure graph and a procedure of constructing a fault template library. The following briefly describes the procedure of constructing an atomic procedure graph and the procedure of constructing a fault template library. In an embodiment, the procedure of constructing an atomic procedure graph includes step 301 and step 302.

Step 301: Extract an atomic procedure diagram.

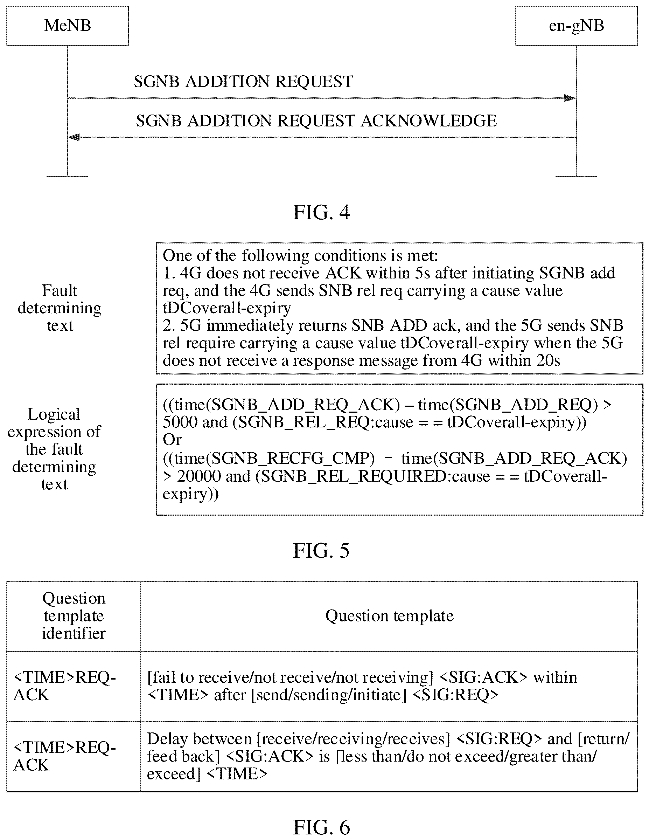

In this application, the atomic procedure diagram may be extracted from a 3GPP protocol document, and a tool for extracting pictures in batches may be but is not limited to Office.Files.Images. The extracted pictures may include a miscellaneous picture and an unnecessary atomic procedure diagram, which may be removed after being screened by an expert. For example, an atomic procedure diagram in the 3GPP protocol is shown in FIG. 4.

Step 302: Generate an atomic procedure graph.

Specifically, a signaling attribute, a procedure attribute, and a signaling transfer direction are obtained from the atomic procedure diagram, nodes of the atomic procedure graph are formed based on the signaling attribute and the procedure attribute, and edges of the atomic procedure graph are formed based on the signaling transfer direction. The atomic procedure graph is a knowledge graph including atomic procedure information. The knowledge graph is a graph-based data structure, and may be considered as a semantic network including nodes and edges. Each node represents an entity, and each edge represents a relationship between entities. A method for obtaining information from the atomic procedure diagram includes but is not limited to optical character recognition (optical character recognition, OCR).

The signaling attribute includes at least one of a signaling sender, a signaling receiver, a signaling name, a signaling type, a port type, and a signaling sequence number. The signaling sender is a network element that sends signaling. The signaling receiver is a network element that receives the signaling. The signaling type includes a request type (such as REQ), a response type (such as ACK), an information type (such as INFO), a reconfiguration type (such as RECFG), and the like. The port type includes S1, NG, X2, UU, and the like. It should be understood that the signaling type and the port type of the 3GPP are not limited to the foregoing examples. The signaling sequence number is a sequence number of a step in which the signaling is located, and the signaling sequence number may start from 1.

The procedure attribute includes an atomic procedure identifier (for example, an atomic procedure name) and an atomic procedure type. The atomic procedure type includes signaling types that are spliced based on a signaling interaction sequence. For example, REQ-ACK represents an atomic procedure formed by the request type and the response type in sequence; and RECFG-CMP represents an atomic procedure formed by the reconfiguration type and a completion type in sequence.

The procedure of constructing a fault template library includes step 303 and step 304.

Step 303: Extract an atomic procedure clause.

The atomic procedure clause is one sentence that is used to describe a signaling fault, and the sentence corresponds to one atomic procedure.

Step 304: Construct a question template library.

Specifically, a question template and a question template identifier are generated based on the atomic procedure clause. The question template includes named entities and a relationship between the named entities. The named entity includes but is not limited to a keyword, a parameter type, a signaling entity, or a non-signaling entity.

Step 305: Associate an atomic procedure with the question template.

For a signaling type involved in the question template and a signaling type involved in the atomic procedure, the question template is associated with the atomic procedure type of the atomic procedure graph.

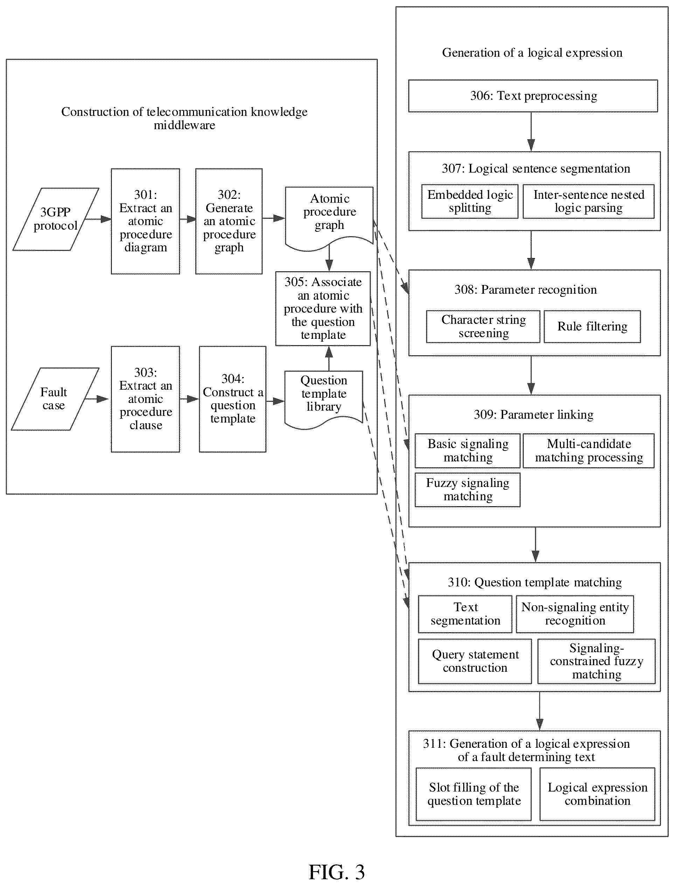

A method for generating a logical expression is described below. Refer to FIG. 3. In an embodiment, the method for generating a logical expression includes the following steps.

Step 306: Text preprocessing.

The text preprocessing includes data cleaning and natural sentence segmentation. The data cleaning includes at least one of removing an invalid character and removing a redundant space character. The natural sentence segmentation refers to dividing a plurality of sentences into a natural sentence sequence based on a newline character. The text preprocessing is an optional step.

Step 307: Logical sentence segmentation.

The logical sentence segmentation includes embedded logic splitting and inter-sentence nested logic parsing.

The embedded logic splitting includes embedded logical relationship recognition, sentence component analysis, and sentence splitting and reassembling. The embedded logical relationship recognition refers to a logical relationship corresponding to a keyword (for example, or, OR, and, AND). The sentence component analysis refers to recognizing subjects with connected embedded logic and a common expression text by using a regular expression. The sentence splitting and reassembling refers to recombining the subjects and the common expression text into a complete sentence. A logical relationship between reassembled sentences is the logical relationship corresponding to the keyword.

The inter-sentence nested logic parsing includes: recognizing a level to which each sentence belongs by using a regular expression, and reassembling sentences at a same level based on the embedded logic splitting. A logical relationship between sentences includes a level relationship and the logical relationship corresponding to the keyword. In an example, an identifier of the level relationship includes a first-level sequence number and a second-level sequence number, as shown in Table 5:

Table 5

| First-level sequence number | 1., 2., 3., ... |
| --- | --- |
| | One, two, three, ... |
| | Scenario 1, scenario 2, scenario 3, ... |
| | Condition 1, condition 2, condition 3, ... |
| Second-level sequence number | 1), 2), 3), ... |
| | (1), (2), (3), ... |
| | 1.1, 1.2, 1.3, ... |

Step 308: Parameter recognition.

The parameter recognition includes character string screening and rule filtering.

The character string screening includes: after keyword replacement is performed by using a preset word list, extracting an English character string whose length is greater than k. Chinese included in the preset word list corresponds to signaling or a signaling parameter.

The rule filtering includes: filtering a character string by using a service rule. The service rule includes one or more of the following rules:

Rule 1: A character string including a preset signaling type is a signaling character string. The preset signaling type includes but is not limited to ACK, REQ, REL, or SGNB.
Rule 2: A character string including "-" is not a signaling character string.
Rule 3: A character string starting with a digit is not a signaling character string.
Rule 4: A standard name is not a signaling character string.
Rule 5: A network element name is not a signaling character string.
Rule 6: A port name is not a signaling character string.

Step 309: Parameter linking.

The parameter linking is a method for pointing a signaling character string in a fault determining text to atomic procedure signaling. The parameter linking includes basic signaling matching, multi-candidate matching processing, and fuzzy signaling matching.

The basic signaling matching includes: When a signaling type of the signaling character string is different from a signaling type of candidate protocol signaling, a matching score of the candidate protocol signaling is -1. When a signaling type of the signaling character string is the same as a signaling type of candidate protocol signaling, a fuzzy matching score between the signaling character string and the candidate protocol signaling is calculated. Fuzzy matching is a method for performing matching by using a custom rule. The custom rule is different from a full matching rule or a regular expression.

The multi-candidate matching processing includes: selecting, according to a preset matching rule, target protocol signaling from a plurality of pieces of candidate protocol signaling that have a same fuzzy matching score.

The preset matching rule includes one or more of the following rules:

Rule 7: If an atomic procedure to which the signaling character string belongs is consistent with an atomic procedure to which the candidate protocol signaling belongs, 1 point is scored.

Rule 8: If the signaling type of the signaling character string and the signaling type of the candidate protocol signaling respond to each other, 1 point is scored. The signaling types that respond to each other include REQ and ACK, REQUIRED-CONFIRM, and the like.

Rule 9: If a port type of the signaling character string is the same as a port type of the candidate protocol signaling, 1 point is scored.

The fuzzy signaling matching includes: after obtaining a previous piece of signaling of the signaling character string, determining protocol signaling corresponding to the previous piece of signaling of the signaling character string, and then using a next piece of signaling of the protocol signaling in the atomic procedure as protocol signaling corresponding to the signaling character string; after obtaining a next piece of signaling of the signaling character string, determining protocol signaling corresponding to the next piece of signaling of the signaling character string, and then using a previous piece of signaling of the protocol signaling in the atomic procedure as protocol signaling corresponding to the signaling character string; or when a previous signaling character string fails to match protocol signaling of the atomic procedure graph, searching a text after the signaling character string for a signaling character string of a same signaling type based on the signaling type of the signaling character string; and when the signaling string of the same signaling type matches protocol signaling, determining that the protocol type is protocol signaling of the to-be-processed sentence.

Step 310: Question template matching.

The question template matching includes text segmentation, non-signaling entity recognition, query statement construction, and signaling-constrained fuzzy matching.

The text segmentation refers to segmenting a sentence into clauses based on the atomic procedure after determining an atomic procedure to which each piece of signaling belongs based on a parameter linking result, so that signaling of each clause belongs to the same atomic procedure. For example, "4G does not receive ACK within 5s after initiating SGNB add req, and the 4G sends SNB rel req carrying a cause value tDCoverall-expiry" is divided into "4G does not receive ACK within 5s after initiating SGNB add req", and "the 4G sends SNB rel req carrying a cause value tDCoverall-expiry", which respectively correspond to two procedures: "access addition preparation" and "releasing".

The non-signaling entity recognition refers to recognizing a non-signaling entity in a clause by using a regular expression. The non-signaling entity includes time, a standard, a port, a digit, and another parameter value.

The query statement construction refers to performing mask processing on an entity in a text, and replacing a signaling entity and a non-signaling entity with a corresponding mask character string, to obtain a query statement corresponding to the question template. An objective of the query statement construction is to improve accuracy of template matching. The mask character string includes but is not limited to <SIG:TYPE>, <TIME>, <MODE>, <PORT>, <NUM>, or <VALUE>. <SIG:TYPE> is signaling, and TYPE is a signaling type. <TIME> corresponds to the time, <MODE> corresponds to the standard, <PORT> corresponds to the port, <NUM> corresponds to the digit, and <VALUE> corresponds to the parameter value.

The signaling-constrained fuzzy matching refers to obtaining a corresponding question template based on a signaling character string of the atomic procedure clause, to obtain a candidate question template set.

Step 311: Generation of a logical expression of the fault determining text.

The generation of the logical expression of the fault determining text includes slot filling of the question template and logical expression combination. The slot filling of the question template refers to filling the protocol signaling and the non-signaling entity into a slot of a logical expression template corresponding to the question template. The logical expression combination refers to that when the fault determining text includes a plurality of sentences, logical expressions of the plurality of sentences are connected based on an inter-sentence logical relationship character, to obtain the logical expression corresponding to the fault determining text.

Refer to FIG. 5. In an example, the fault determining text is:

One of the following conditions is met:

1. 4G does not receive ACK within 5s after initiating SGNB add req, and the 4G sends SNB rel req carrying a cause value tDCoverall-expiry.

2. 5G immediately returns SNB ADD ack, and the 5G sends SNB rel require carrying a cause value tDCoverall-expiry when the 5G does not receive a response message from 4G within 20s.

The logical expression of the fault determining text is:

$$((time(SGNB\_ADD\_REQ\_ACK) - time(SGNB\_ADD\_REQ) > 5000$$

and (SGNB_REL_REQ:cause == tDCoverall-expiry))
Or

$$((time(SGNB\_RECFG\_CMP) - time(SGNB\_ADD\_REQ\_ACK) > 20000$$

and (SGNB_REL_REQUIRED:
cause == tDCoverall-expiry)).

Before the method for constructing a fault knowledge graph, a correspondence between the question template and the atomic procedure needs to be established first. The following describes the establishment of the correspondence. In an optional embodiment, the method for constructing a fault knowledge graph in this application further includes: extracting an atomic procedure diagram from a protocol document; creating the atomic procedure graph based on the atomic procedure diagram of the protocol document, and obtaining a fault description sentence set from a fault document; obtaining a question template corresponding to each fault description sentence in the fault description sentence set; and when all signaling of a target question template belongs to a signaling set of a target atomic procedure, associating the target question template with an atomic procedure identifier of the target atomic procedure. In this way, the correspondence between the question template and the atomic procedure may be established, and the question template corresponding to the atomic procedure may be automatically searched for based on the correspondence.

In this embodiment, the atomic procedure graph includes a node and an edge. The node includes a signaling attribute and a procedure attribute. The signaling attribute includes at least one of a signaling sender identifier, a signaling receiver identifier, a signaling name, a port type, and a signaling sequence number. The procedure attribute includes an atomic procedure identifier and a signaling set corresponding to an atomic procedure. The procedure attribute may further include an atomic procedure type. The edge indicates a signaling transfer direction. The fault description sentence set includes a plurality of fault description sentences.

The target question template is any question template. In an example, a question template and a question template identifier of <TIME>REQ-ACK are shown in FIG. 6. The question template identifier is <TIME>REQ-ACK, and a question template corresponding to the question template identifier includes [fail to receive/not receive/not receiving] <SIG:ACK> within <TIME> after [send/sending/initiate] <SIG:REQ>, and a delay between [receive/receiving/receives] <SIG:REQ> and [return/feed back] <SIG:ACK> is [less than/do not exceed/greater than/exceed] <TIME>. A word in [] is an optional keyword, and a word in angle brackets <> is a named entity, where the signaling entity may further include a type. For example, <SIG:REQ> represents a signaling entity of an REQ type.

If a type of atomic procedure includes all signaling types involved in a fault, it is considered that the fault may occur in the atomic procedure. In this case, a fault template name is added to attribute information of the atomic procedure. For example, an atomic procedure of a type "REQ-ACK-REJ" indicates that the atomic procedure includes three types of signaling: REQ, ACK, and REJ. A fault template <TIME>REQ-ACK involves two types of signaling: REQ and ACK. Therefore, <TIME>REQ-ACK is added to a fault template set associated with the atomic procedure of the type.

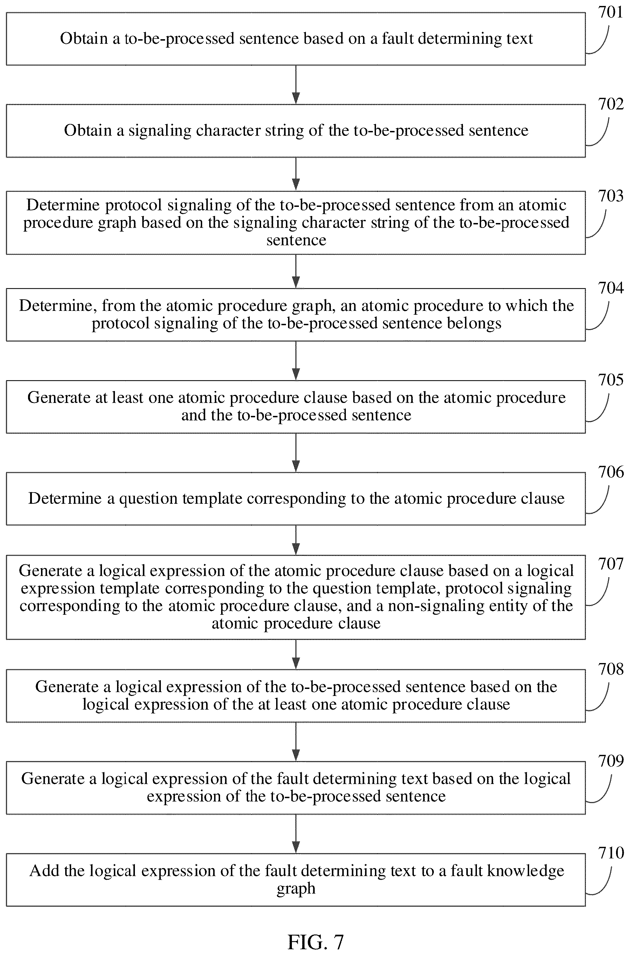

The following describes a method for constructing a fault knowledge graph in this application. Refer to FIG. 7. An embodiment of the method for constructing a fault knowledge graph in this application includes the following steps.

Step 701: Obtain a to-be-processed sentence based on a fault determining text.

Specifically, step 701 includes: when a sentence of the fault determining text does not include a logical operation keyword, using the sentence of the fault determining text as the to-be-processed sentence; or when the sentence of the fault determining text includes the logical operation keyword, determining a plurality of subjects in the sentence of the fault determining text based on the logical operation keyword, using a text obtained after the logical operation keyword and the plurality of subjects are removed from the sentence of the fault determining text as a common expression text, and generating one to-be-processed sentence based on the common expression text and each subject. The subject includes but is not limited to a signaling entity. In this way, after the sentence is reassembled, a case in which signaling of the to-be-processed sentence is inconsistent with signaling of an atomic procedure is reduced, and a success rate of recognizing the atomic procedure can be improved.

The logical operation keyword includes at least one piece of the following information: or, OR, and, AND. When the sentence of the fault determining text includes the logical operation keyword, it indicates that the sentence may be split and reassembled into a plurality of sentences.

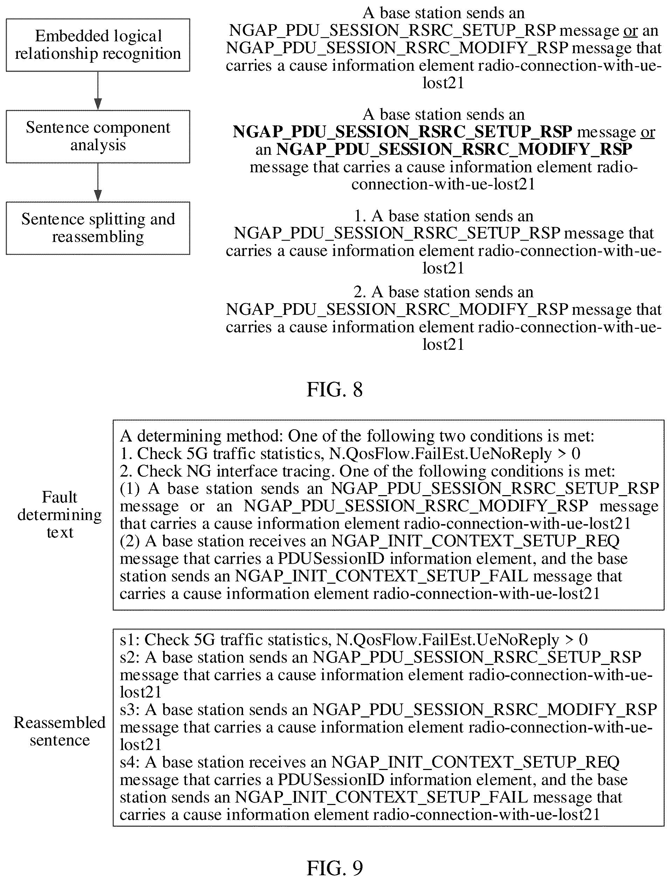

Refer to FIG. 8. In an example, a base station sends an NGAP_PDU_SESSION_RSRC_SETUP_RSP message or an NGAP_PDU_SESSION_RSRC_MODIFY_RSP message that carries a cause information element radio-connection-with-ue-lost21, where "or" is a logical operation keyword, and subjects connected by the logical operation keyword include NGAP_PDU_SESSION_RSRC_SETUP_RSP and NGAP_PDU_SESSION_RSRC_MODIFY_RSP. The common expression text includes: A base station sends a message that carries a cause information element radio-connection-with-ue-lost21. A reassembled sentence 1 and a reassembled sentence 2 are generated based on the subjects and the common expression text.

The reassembled sentence 1 is: A base station sends an NGAP_PDU_SESSION_RSRC_SETUP_RSP message that carries a cause information element radio-connection-with-ue-lost21.

The reassembled sentence 2 is: A base station sends an NGAP_PDU_SESSION_RSRC_MODIFY_RSP message that carries a cause information element radio-connection-with-ue-lost21.

Refer to FIG. 9. In another example, the fault determining text includes:

A determining method: One of the following two conditions is met:

1. Check 5G traffic statistics, N.QosFlow.FailEst.UeNoReply > 0.
2. Check NG interface tracing, where one of the following conditions is met:

   (1) A base station sends an NGAP_PDU_SESSION_RSRC_SETUP_RSP or NGAP_PDU_SESSION_RSRC_MODIFY_RSP message that carries a cause information element radio-connection-with-ue-lost21.
   (2) A base station receives an NGAP_INIT_CONTEXT_SETUP_REQ message that carries a PDUSessionID information element, and the base station sends an NGAP_INIT_CONTEXT_SETUP_FAIL message that carries a cause information element radio-connection-with-ue-lost21.

The following reassembled sentences may be generated based on a level identifier and a logical operation keyword:

s1: Check 5G traffic statistics, N.QosFlow.FailEst.UeNoReply > 0;
s2: A base station sends an NGAP_PDU_SESSION_RSRC_SETUP_RSP message that carries a cause information element radio-connection-with-ue-lost21;
s3: A base station sends an NGAP_PDU_SESSION_RSRC_MODIFY_RSP message that carries a cause information element radio-connection-with-ue-lost21; and
s4: A base station receives an NGAP_INIT_CONTEXT_SETUP_REQ message that carries a PDUSessionID information element, and the base station sends an NGAP_INIT_CONTEXT_SETUP_FAIL message that carries a cause information element radio-connection-with-ue-lost21.

It should be understood that before step 701, text preprocessing may be performed, to remove an invalid character or a redundant space character.

Step 702: Obtain a signaling character string of the to-be-processed sentence.

Optionally, step 702 includes: when the to-be-processed sentence includes a keyword in a preset word list, replacing the keyword in the preset word list with an English character string corresponding to the keyword; and extracting at least one candidate character string from a sentence obtained through replacement, and selecting a candidate character string including a preset signaling type as the signaling character string of the to-be-processed sentence. In this way, the signaling character string of the to-be-processed sentence can be obtained through screening based on a length of the character string and the preset signaling type. It should be understood that replacing the keyword in the preset word list with the English character string and screening the candidate character string based on the length of the character string are optional steps, replacing the keyword in the preset word list with the English character string can increase a quantity of recognizable signaling character strings, and screening the candidate character string based on the length of the character string can reduce a quantity of character strings that do not belong to signaling.

A length of the candidate character string is greater than k, where k may be but is not limited to 2. The keyword in the preset word list is a Chinese description of signaling. For example, the keyword is SCG addition and reconfiguration, and an English character string corresponding to the keyword is RRC_CONN_RECFG. The preset signaling type includes but is not limited to ACK, REQ, REL, or SGNB.

Optionally, before selecting the candidate character string including the preset signaling type as the signaling character string of the to-be-processed sentence, a target candidate character string is removed from the at least one candidate character string, where the target candidate character string is a character string including "-", a character string starting with a digit, a standard name, a network element name, or a port name. In this way, a character string that does not belong to signaling can be removed before the signaling character string is selected. This reduces calculation overheads for selecting the signaling character string.

Step 703: Determine protocol signaling of the to-be-processed sentence from an atomic procedure graph based on the signaling character string of the to-be-processed sentence.

Optionally, step 703 includes: selecting a candidate protocol signaling set from the atomic procedure graph based on a signaling type of the signaling character string of the to-be-processed sentence; calculating a fuzzy matching score corresponding to the candidate protocol signaling based on a length of the signaling character string, a length of the candidate protocol signaling, and an editing distance between the signaling character string and the candidate protocol signaling; and determining the protocol signaling of the to-be-processed sentence based on candidate protocol signaling corresponding to a highest fuzzy matching score.

The editing distance is also referred to as a Levenshtein distance, and is used to describe a minimum quantity of operations used for converting a character string into another character string. The operations include insertion, deletion, and replacement. The editing distance between the signaling character string and the candidate protocol signaling is denoted as $ldist(p_1, p_2)$, the fuzzy matching score is denoted as $f(p_1, p_2)$, the length of the signaling character string is denoted as $len(p_1)$, and the length of the candidate protocol signaling is denoted as $len(p_2)$. In this case, the following formula is satisfied:

$$f(p_1, p_2) = \frac{len(p_1) + len(p_2) - ldist(p_1, p_2)}{len(p_1) + len(p_2)}$$

According to the formula, it can be learned that the fuzzy matching score ranges from 0 to 1. A higher fuzzy matching score indicates a higher similarity between the signaling character string and the protocol signaling. Because there are irregularities such as shorthand, typo, omission, and abbreviation in the signaling character string, the protocol signaling corresponding to the signaling character string can be accurately recognized based on the fuzzy matching score. This significantly improves accuracy of signaling recognition.

When the highest fuzzy matching score corresponds to a plurality of pieces of candidate protocol signaling, according to a preset matching rule, one piece of candidate protocol signaling may be selected from the pieces of candidate protocol signaling with the highest fuzzy matching score as the protocol signaling of the to-be-processed sentence.

The preset matching rule includes at least one of the following rules: an atomic procedure to which the signaling character string belongs is the same as an atomic procedure to which the candidate protocol signaling belongs, a signaling type of the signaling character string and a signaling type of the candidate protocol signaling respond to each other, and a port type of the signaling character string is the same as a port type of the candidate protocol signaling.

When the signaling character string and the candidate protocol signaling meet any rule in the preset matching rule, a matching score may be increased by 1. In this way, the more rules that the signaling character string and the candidate protocol signaling meet, the higher the matching score between the signaling character string and the candidate protocol signaling. When the highest fuzzy matching score corresponds to a plurality of pieces of candidate protocol signaling, accuracy of signaling recognition may be further improved according to the preset matching rule.

In another optional embodiment, step 703 includes: determining the protocol signaling of to-be-processed signaling from the atomic procedure graph based on the signaling character string of the to-be-processed sentence includes: when a previous signaling character string of the signaling character string of the to-be-processed sentence matches first target protocol signaling, determining that the protocol signaling of the to-be-processed signaling is a next piece of protocol signaling of the first target protocol signaling in an atomic procedure to which the first target protocol signaling belongs. When the previous signaling character string successfully matches the protocol signaling, the protocol signaling of to-be-processed signaling may be determined. This improves a success rate of signaling recognition.

For example, the signaling character string is "ACK". Because the ACK is not protocol signaling, protocol signaling corresponding to the ACK cannot be directly determined. A previous signaling character string of the ACK in the fault determining text is obtained. An example in which protocol signaling corresponding to the previous signaling character string is REQ signaling is used, and a next piece of signaling of the REQ signaling in the atomic procedure is used as the protocol signaling corresponding to the "ACK".

For another example, the fault determining text includes: "5G immediately returns SNB ADD ack, and the 5G sends SNB rel require carrying a cause value tDCoverall-expiry when the 5G does not receive a response message from 4G within 20s", and the signaling character string is a "response message". Because the "response message" is not protocol signaling, protocol signaling corresponding to the "response message" cannot be directly determined. A previous signaling character string of the "response message" in the fault determining text is obtained. An example in which protocol signaling corresponding to the previous signaling character string is SGNB_ADD_REQ_ACK is used, and a next piece of signaling of SGNB_ADD_REQ_ACK is used as the protocol signaling corresponding to the "response message".

In another optional embodiment, step 703 includes: determining the protocol signaling of the to-be-processed signaling from the atomic procedure graph based on the signaling character string of the to-be-processed sentence includes: when a next signaling character string of the signaling character string of the to-be-processed sentence matches second target protocol signaling, determining that the protocol signaling of the to-be-processed sentence is a previous piece of protocol signaling of the second target protocol signaling in an atomic procedure to which the second target protocol signaling belongs. When the next signaling character string successfully matches the protocol signaling, the protocol signaling of to-be-processed signaling may be determined. This improves a success rate of signaling recognition.

When the previous signaling character string fails to match protocol signaling of the atomic procedure graph, and/or when the next signaling character string fails to match the protocol signaling of the atomic procedure graph, a text after the signaling character string of the to-be-processed sentence is searched for a target signaling character string based on a signaling type of the signaling character string of the to-be-processed sentence; and when the target signaling character string matches third target protocol signaling, it is determined that the protocol signaling of the to-be-processed sentence is the third target protocol signaling. In this way, a success rate of searching for the protocol signaling can be improved. A signaling type of the target signaling character string is the same as the signaling type of the signaling character string of the to-be-processed sentence. For example, the signaling type of the signaling character string is ACK, a signaling type of a next signaling character string of the signaling character string is SGNB ACK, SGNB ADDITION REQUEST ACKNOWLEDGE is found in the atomic procedure based on the SGNB ACK, and it is determined that the protocol signaling corresponding to the ACK is SGNB ADDITION REQUEST ACKNOWLEDGE.

It should be noted that when the signaling type of the signaling character string is different from the signaling type of the atomic procedure graph, a fuzzy matching score between the signaling character string and each protocol signaling may also be calculated, and the protocol signaling corresponding to the signaling character string is determined based on a maximum value of the fuzzy matching score. The protocol signaling of the to-be-processed sentence refers to the protocol signaling corresponding to the signaling character string of the to-be-processed sentence.

Step 704: Determine, from the atomic procedure graph, an atomic procedure to which the protocol signaling of the to-be-processed sentence belongs.

Step 705: Generate at least one atomic procedure clause based on the atomic procedure and the to-be-processed sentence.

When a plurality of pieces of consecutive signaling belong to one atomic procedure, a sentence including the plurality of pieces of signaling is used as one atomic procedure clause.

Step 706: Determine a question template corresponding to the atomic procedure clause.

Optionally, step 706 includes: replacing a signaling character string and a non-signaling entity in the atomic procedure clause with a mask character string, to obtain a query statement; obtaining a candidate question template set corresponding to the atomic procedure; selecting a candidate question template subset from the candidate question template set based on a quantity of signaling of the query statement; calculating, for each candidate question template in the candidate question template subset, a fuzzy matching score between the candidate question template and the query statement; and determining that the question template corresponding to the atomic procedure clause is a candidate question template corresponding to a highest matching score. A quantity of signaling of each candidate question template in the candidate question template subset is the same as the quantity of signaling of the query statement, and the mask character string of the query statement is the same as a signaling character string corresponding to the question template.

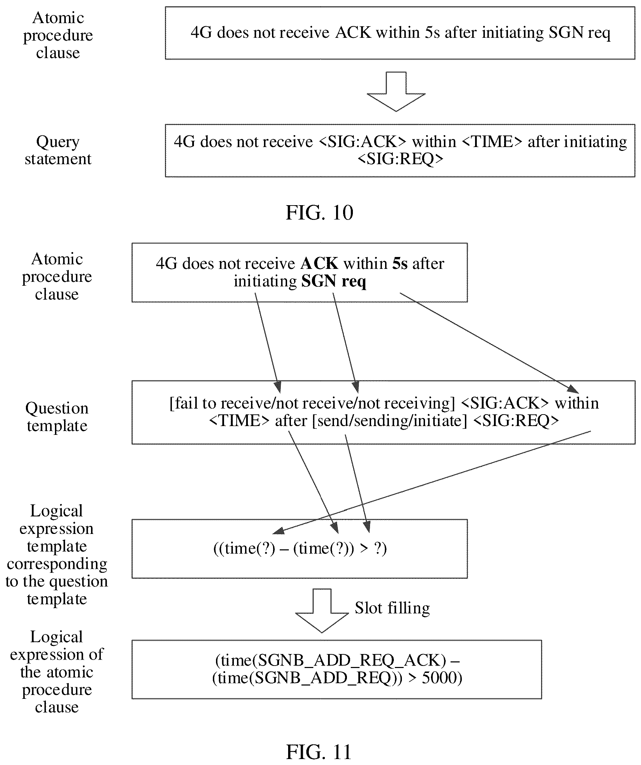

Refer to FIG. 10. In an example, an atomic procedure clause is: 4G does not receive ACK within 5s after initiating SGN req, and a corresponding query statement is: 4G does not receive <SIG:ACK> within <TIME> after initiating <SIG:REQ>.

Specifically, for the candidate question template set, the following steps are performed:

Step A: Compare whether the quantity of signaling of the candidate question template is the same as the quantity of signaling of the query statement, if not, determine that template matching fails, and if yes, perform step B.

Step B: Obtain a candidate template statement corresponding to each candidate question template.

In another example, if the candidate question template is [fail to receive/not receive] <SIG:ACK> within <TIME> after [send/sending] <SIG:REQ>, four candidate template statements corresponding to the question template are respectively as follows:

A candidate template statement 1 is: [fail to receive] <SIG:ACK> within <TIME> after [send] <SIG:REQ>.
A candidate template statement 2 is: [not receive] <SIG:ACK> within <TIME> after [send] <SIG:REQ>.
A candidate template statement 3 is: [fail to receive] <SIG:ACK> within <TIME> after [sending] <SIG:REQ>.
A candidate template statement 4 is: [not receive] <SIG:ACK> within <TIME> after [sending] <SIG:REQ>.

Step C: Calculate a fuzzy matching score between each candidate template statement and the query statement. Optionally, a length of the candidate template statement and a length of the query statement satisfy the following calculation formula:

$$g(t'_i, ss) = \frac{\operatorname{len}(t'_i) + \operatorname{len}(ss) - \operatorname{ldist}(t'_i, ss)}{\operatorname{len}(t'_i) + \operatorname{len}(ss)}$$

$t'_i$ indicates an i<sup>th</sup> candidate template statement, and ss indicates the query statement. $g(t'_i, ss)$ indicates the fuzzy matching score between the candidate template statement and the query statement, $len(t'_i)$ indicates a length of the i<sup>th</sup> candidate template statement, len(ss) indicates the length of the query statement, and $ldist(t'_i, ss)$ indicates an editing distance between the candidate template statement and the query statement.

Step D: Obtain a maximum value of the fuzzy matching score.

$$f(t, ss) = Max_{t'_i \in t'} g(t'_i, ss)$$

*t'* indicates a candidate template statement set.

Step E: Use a question template corresponding to the maximum value of the fuzzy matching score as the question template corresponding to the atomic procedure clause.

After fuzzy matching, a higher fuzzy matching score indicates higher accuracy of the found question template.

Step 707: Generate a logical expression of the atomic procedure clause based on a logical expression template corresponding to the question template, protocol signaling corresponding to the atomic procedure clause, and the non-signaling entity of the atomic procedure clause.

Optionally, step 707 includes: filling the protocol signaling corresponding to the atomic procedure clause and the non-signaling entity of the atomic procedure clause into a slot of the logical expression template corresponding to the question template, to obtain the logical expression of the atomic procedure clause.

Refer to FIG. 11. In an example, the atomic procedure clause is: 4G does not receive ACK within 5s after initiating SGN req, a question template is [fail to receive/not receive/not receiving] <SIG:ACK> within <TIME> after [send/sending/initiate] <SIG:REQ>, a logical expression template corresponding to the question template is ((time(?) - (time(?)) > ?), and each ? corresponds to one slot. A logical expression corresponding to the atomic procedure clause is (time(SGNB_ADD_REQ_ACK) - (time(SGNB_ADD_REQ)) > 5000). The signaling entity includes SGNB_ADD_REQ_ACK and SGNB_ADD_REQ, and a value of the time is 5000.

Step 708: Generate a logical expression of the to-be-processed sentence based on the logical expression of the at least one atomic procedure clause.

When there are a plurality of atomic procedure clauses, an inter-sentence logical relationship between the plurality of atomic procedure clauses is obtained, and logical expressions of the plurality of atomic procedure clauses are combined into the logical expression of the to-be-processed sentence based on the inter-sentence logical relationship between the plurality of atomic procedure clauses. If a separator between the plurality of atomic procedure clauses is a comma or a period, the inter-sentence logical relationship of the plurality of atomic procedure clauses is AND. When the separator between the plurality of atomic procedure clauses includes a logical keyword (for example, AND, OR, and AND), the inter-sentence logical relationship between the plurality of atomic procedure clauses corresponds to the logical keyword, a logical relationship corresponding to "AND" and "AND" is AND, and a logical relationship corresponding to "OR" is OR.

Step 709: Generate a logical expression of the fault determining text based on the logical expression of the to-be-processed sentence.

Specifically, step 709 includes: when there are a plurality of to-be-processed sentences, generating the logical expression of the fault determining text based on the inter-sentence logical relationship between all the to-be-processed sentences and the logical expression of the to-be-processed sentence.

An inter-sentence logical relationship between any two to-be-processed sentences includes: AND and OR. A method for obtaining the inter-sentence logical relationship between to-be-processed sentences includes: when the fault determining text includes a level identifier and a sentence of the fault determining text does not include a logical operation keyword, determining an inter-sentence logical relationship between all the to-be-processed sentences based on the level identifier; when the fault determining text does not include a level identifier and a sentence of the fault determining text includes a logical operation keyword, determining an inter-sentence logical relationship between all to-be-processed sentences based on the logical operation keyword; or when the fault determining text includes a level identifier and a sentence of the fault determining text includes a logical operation keyword, determining an inter-sentence logical relationship between all to-be-processed sentences based on the level identifier and the logical operation keyword. When the fault determining text includes a sentence of a level structure and/or a sentence of a parallel structure, the inter-sentence logical relationship between the to-be-processed sentences may be obtained, and the logical expressions of the to-be-processed sentences are combined into the logical expression of the fault determining text based on the inter-sentence logical relationship between the to-be-processed sentences.

The fault determining text shown in FIG. 8 includes a logical relationship and does not include a level identifier, and an inter-sentence logical relationship between the sentences is 1‖2. The fault determining text shown in FIG. 9 includes a logical relationship and a level identifier, and an inter-sentence logical relationship between the sentences is s1‖((s2‖s3‖)s4).

Step 710: Add the logical expression of the fault determining text to a fault knowledge graph.

In this embodiment, an atomic procedure graph can be searched for corresponding protocol signaling and a corresponding atomic procedure based on a signaling character string of the fault determining text. Because both the protocol signaling and the atomic procedure are standardized objects, a success rate of recognizing the signaling character string can be improved, and a success rate of converting the fault determining text into a logical expression is improved.

In addition, in an existing method for generating a logical expression, it is difficult to determine a logical relationship such as a time sequence, a time difference, inclusion, and an intersection between parameters through syntax structure analysis. In this application, a question template and a logical expression template that include the foregoing logical relationship may be pre-configured, and a correspondence between the question template and the atomic procedure is established. In this way, a corresponding question template and a corresponding logical expression template can be searched for based on the atomic procedure, to generate a logical expression that can represent a complex logical relationship.

Next, an existing network fault usually involves a relationship between a plurality of parameters. An existing logical expression is a relationship triplet, which can only express a binary relationship, but cannot express a logical relationship between three or more parameters. The logical expression in this application includes an inter-sentence logical relationship between atomic procedure clauses and/or an inter-sentence logical relationship between to-be-processed sentences, and can represent a level relationship and a parallel relationship. Therefore, the logical expression in this application can represent a more complex fault determining method.

In another optional embodiment, the method for constructing a fault knowledge graph in this application further includes: receiving a log sent by a network device; searching the fault knowledge graph for a target logical expression based on a signaling character string and a non-signaling entity that are included in the log; and determining, based on an output result of the target logical expression, whether the log includes a fault event.

In this embodiment, after the fault knowledge graph is constructed, fault detection can be automatically performed based on the fault knowledge graph. This improves a fault detection speed. For example, if the output result of the target logical expression is true, it is determined that the log includes the fault event; or if the output result of the target logical expression is false, it is determined that the log does not include the fault event. It should be understood that a correspondence between the output result of the logical expression and the fault event is not limited to the foregoing example, and may be specifically set based on an actual situation. This is not limited in this application.

This application provides a computing apparatus that can implement the method for constructing a fault knowledge graph in this application. In an embodiment, a computing apparatus 1200 includes:

an obtaining module 1201, configured to: obtain a to-be-processed sentence based on a fault determining text, and obtain a signaling character string of the to-be-processed sentence;

a first matching module 1202, configured to determine protocol signaling of the to-be-processed sentence from an atomic procedure graph based on the signaling character string of the to-be-processed sentence;

a second matching module 1203, configured to: determine, from the atomic procedure graph, an atomic procedure to which the protocol signaling of the to-be-processed sentence belongs; generate at least one atomic procedure clause based on the atomic procedure and the to-be-processed sentence; and determine a question template corresponding to the atomic procedure clause; and

a generation module 1204, configured to: generate a logical expression of the atomic procedure clause based on a logical expression template corresponding to the question template, protocol signaling corresponding to the atomic procedure clause, and a non-signaling entity of the atomic procedure clause; generate a logical expression of the to-be-processed sentence based on the logical expression of the at least one atomic procedure clause; generate a logical expression of the fault determining text based on the logical expression of the to-be-processed sentence; and add the logical expression of the fault determining text to a fault knowledge graph.

In an optional embodiment, the obtaining module 1201 is specifically configured to: when a sentence of the fault determining text does not include a logical operation keyword, use the sentence of the fault determining text as the to-be-processed sentence; or when the sentence of the fault determining text includes the logical operation keyword, determine a plurality of subjects in the sentence of the fault determining text based on the logical operation keyword, and generate one to-be-processed sentence based on a common expression text and each subject.

In another optional embodiment, the obtaining module 1201 is specifically configured to: when the to-be-processed sentence includes a keyword in a preset word list, replace the keyword in the preset word list with an English character string corresponding to the keyword; and extract at least one candidate character string from a sentence obtained through replacement, and select a candidate character string including a preset signaling type as the signaling character string of the to-be-processed sentence.

Further, in another optional embodiment, the obtaining module 1201 is further configured to remove a target candidate character string from the at least one candidate character string, where the target candidate character string is a character string including "-", a character string starting with a digit, a standard name, a network element name, or a port name.

In another optional embodiment, the first matching module 1202 is specifically configured to: select a candidate protocol signaling set from the atomic procedure graph based on a signaling type of the signaling character string of the to-be-processed sentence; calculate a fuzzy matching score corresponding to the candidate protocol signaling based on a length of the signaling character string of the to-be-processed sentence, a length of the candidate protocol signaling, and an editing distance between the signaling character string of the to-be-processed sentence and the candidate protocol signaling; and determine the protocol signaling of the to-be-processed sentence based on candidate protocol signaling corresponding to a highest fuzzy matching score.

Further, in another optional embodiment, the first matching module 1202 is specifically configured to: when the highest fuzzy matching score corresponds to a plurality of pieces of candidate protocol signaling, select, according to a preset matching rule, one piece of candidate protocol signaling from the pieces of candidate protocol signaling with the highest fuzzy matching score as the protocol signaling of the to-be-processed sentence.

In another optional embodiment, the first matching module 1202 is specifically configured to: when a previous signaling character string of the signaling character string of the to-be-processed sentence matches first target protocol signaling, determine that the protocol signaling of to-be-processed signaling is a next piece of protocol signaling of the first target protocol signaling in an atomic procedure to which the first target protocol signaling belongs.

In another optional embodiment, the first matching module 1202 is specifically configured to: when a next signaling character string of the signaling character string of the to-be-processed sentence matches second target protocol signaling, determine that the protocol signaling of the to-be-processed sentence is a previous piece of protocol signaling of the second target protocol signaling in an atomic procedure to which the second target protocol signaling belongs.

In another possible implementation, the first matching module 1202 is specifically configured to: when the previous signaling character string fails to match protocol signaling of the atomic procedure graph, and/or when the next signaling character string fails to match the protocol signaling of the atomic procedure graph, search a text after the signaling character string of the to-be-processed sentence for a target signaling character string based on a signaling type of the signaling character string of the to-be-processed sentence; and when the target signaling character string matches third target protocol signaling, determine that the protocol signaling of the to-be-processed sentence is the third target protocol signaling.

In another optional embodiment, the second matching module 1203 is specifically configured to: replace a signaling character string and the non-signaling entity in the atomic procedure clause with a mask character string, to obtain a query statement; obtain a candidate question template set corresponding to the atomic procedure; select a candidate question template subset from the candidate question template set based on a quantity of signaling of the query statement; calculate, for each candidate question template in the candidate question template subset, a fuzzy matching score between the candidate question template and the query statement; and determine that the question template corresponding to the atomic procedure clause is a candidate question template corresponding to a highest matching score.

In another optional embodiment, the generation module 1204 is specifically configured to fill the protocol signaling corresponding to the atomic procedure clause and the non-signaling entity of the atomic procedure clause into a slot of the logical expression template corresponding to the question template, to obtain the logical expression of the atomic procedure clause.

In another optional embodiment, the generation module 1204 is specifically configured to: when there are a plurality of atomic procedure clauses, obtain an inter-sentence logical relationship between the plurality of atomic procedure clauses; and generate the logical expression of the to-be-processed sentence based on the inter-sentence logical relationship between the plurality of atomic procedure clauses and logical expressions of the plurality of atomic procedure clauses.

In another optional embodiment, the obtaining module 1201 is further configured to: when the fault determining text includes a level identifier and a sentence of the fault determining text does not include a logical operation keyword, determine an inter-sentence logical relationship between all to-be-processed sentences based on the level identifier; when the fault determining text does not include a level identifier and a sentence of the fault determining text includes a logical operation keyword, determine an inter-sentence logical relationship between all to-be-processed sentences based on the logical operation keyword; or when the fault determining text includes a level identifier and a sentence of the fault determining text includes a logical operation keyword, determine an inter-sentence logical relationship between all to-be-processed sentences based on the level identifier and the logical operation keyword; and

the generation module 1204 is specifically configured to generate the logical expression of the fault determining text based on the inter-sentence logical relationship between all the to-be-processed sentences and the logical expression of the to-be-processed sentence.

In another optional embodiment, the computing apparatus 1200 in this application further includes a first creation module, a second creation module, and an association module. The first creation module is configured to extract an atomic procedure diagram from a protocol document; and create the atomic procedure graph based on the atomic procedure diagram of the protocol document. The second creation module is configured to: obtain a fault description sentence set from a fault document; and obtain a question template corresponding to each fault description sentence in the fault description sentence set. The association module is configured to: when all signaling of a target question template belongs to a signaling set of a target atomic procedure, associate the target question template with an atomic procedure identifier of the target atomic procedure.

In another optional embodiment, the computing apparatus 1200 in this application further includes a receiving module and a fault detection module. The receiving module is configured to receive a log sent by a network device. The fault detection module is configured to: search the fault knowledge graph for a target logical expression based on a signaling character string and a non-signaling entity that are included in the log; and determine, based on an output result of the target logical expression, whether the log includes a fault event.

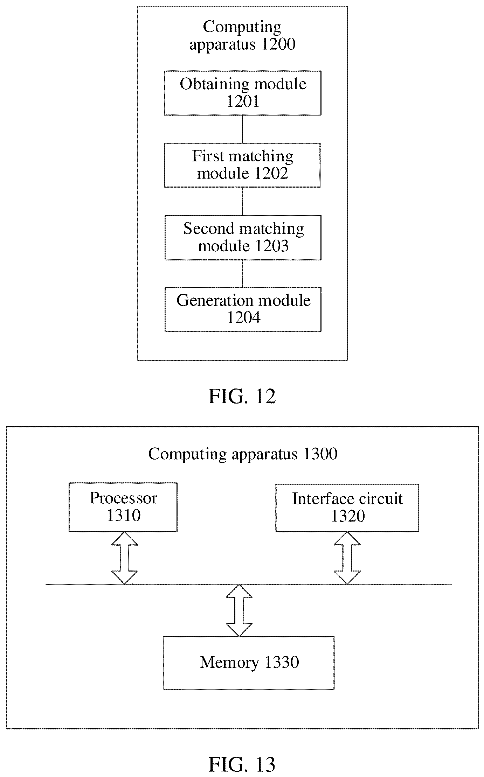

To implement the functions in the foregoing embodiments, the computing apparatus includes hardware structures and/or software modules corresponding to the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions. For term explanations, steps performed by the modules, and beneficial effects in FIG. 12, refer to related descriptions in the embodiment shown in FIG. 7.

As shown in FIG. 13, a computing apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the computing apparatus 1300 may further include a memory 1330, configured to store instructions executed by the processor 1310, input data required for running instructions by the processor 1310, or data generated after the processor 1310 runs the instructions.

When the computing apparatus 1300 is configured to implement the method shown in FIG. 7, the processor 1310 is configured to implement functions of the obtaining module 1201, the first matching module 1202, the second matching module 1203, and the generation module 1204.

When the computing apparatus is a chip used in a network device, the chip may perform functions of the computing apparatus in the foregoing method embodiments. When the computing apparatus is a module used in a base station, the base station module implements functions of the computing apparatus in the foregoing method embodiments. The base station module herein may be a baseband chip in the base station, or may be a DU or another module. The DU herein may be a DU in an open radio access network (open radio access network, O-RAN) architecture.

The processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or terminal as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof to form a new embodiment.

In this application, "at least one" means one or more, and "a plurality of" means two or more. "And/or" describes an association relationship between associated objects and indicates that three relationships may exist. For example, A and/or B may indicate: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers involved in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.    A method for constructing a fault knowledge graph, wherein the method is applied to a fault detection scenario in a wireless communication field, and the method comprises:

obtaining a to-be-processed sentence based on a fault determining text;
obtaining a signaling character string of the to-be-processed sentence;
determining protocol signaling of the to-be-processed sentence from an atomic procedure graph based on the signaling character string of the to-be-processed sentence;
determining, from the atomic procedure graph, an atomic procedure to which the protocol signaling of the to-be-processed sentence belongs;
generating at least one atomic procedure clause based on the atomic procedure and the to-be-processed sentence;
determining a question template corresponding to the atomic procedure clause;
generating a logical expression of the atomic procedure clause based on a logical expression template corresponding to the question template, protocol signaling corresponding to the atomic procedure clause, and a non-signaling entity of the atomic procedure clause;
generating a logical expression of the to-be-processed sentence based on the logical expression of the at least one atomic procedure clause;
generating a logical expression of the fault determining text based on the logical expression of the to-be-processed sentence; and
adding the logical expression of the fault determining text to a fault knowledge graph.

2.    The method according to claim 1, wherein obtaining the to-be-processed sentence based on the fault determining text comprises:

when a sentence of the fault determining text does not comprise a logical operation keyword, using the sentence of the fault determining text as the to-be-processed sentence; or
when the sentence of the fault determining text comprises the logical operation keyword, determining a plurality of subjects in the sentence of the fault determining text based on the logical operation keyword; and generating one to-be-processed sentence based on a common expression text and each subject, wherein the common expression text is a text obtained after the logical operation keyword and the plurality of subjects are removed from the sentence of the fault determining text.

3. The method according to claim 1, wherein obtaining the signaling character string of the to-be-processed sentence comprises:

when the to-be-processed sentence comprises a keyword in a preset word list, replacing the keyword in the preset word list with an English character string corresponding to the keyword;
extracting at least one candidate character string from a sentence obtained through replacement, wherein a length of the candidate character string is greater than a preset character string length; and
selecting a candidate character string comprising a preset signaling type as the signaling character string of the to-be-processed sentence.

4. The method according to claim 3, wherein before selecting the candidate character string comprising the preset signaling type as the signaling character string of the to-be-processed sentence, the method further comprises:
removing a target candidate character string from the at least one candidate character string, wherein the target candidate character string is a character string comprising "-", a string starting with a digit, a standard name, a network element name, or a port name.

5. The method according to claim 1, wherein determining the protocol signaling of the to-be-processed sentence from the atomic procedure graph based on the signaling character string of the to-be-processed sentence comprises:

selecting a candidate protocol signaling set from the atomic procedure graph based on a signaling type of the signaling character string of the to-be-processed sentence, wherein the candidate protocol signaling set comprises at least one piece of candidate protocol signaling;
calculating a fuzzy matching score corresponding to the candidate protocol signaling based on a length of the signaling character string of the to-be-processed sentence, a length of the candidate protocol signaling, and an editing distance between the signaling character string of the to-be-processed sentence and the candidate protocol signaling; and
determining the protocol signaling of the to-be-processed sentence based on candidate protocol signaling corresponding to a highest fuzzy matching score.

6. The method according to claim 5, wherein determining the protocol signaling of the to-be-processed sentence based on the candidate protocol signaling corresponding to the highest fuzzy matching score comprises:
when the highest fuzzy matching score corresponds to a plurality of pieces of candidate protocol signaling, selecting, according to a preset matching rule, one piece of candidate protocol signaling from the pieces of candidate protocol signaling with the highest fuzzy matching score as the protocol signaling of the to-be-processed sentence, wherein the preset matching rule comprises at least one of the following rules: an atomic procedure to which the signaling character string belongs is the same as an atomic procedure to which the candidate protocol signaling belongs, a signaling type of the signaling character string and a signaling type of the candidate protocol signaling respond to each other, and a port type of the signaling character string is the same as a port type of the candidate protocol signaling.

7. The method according to claim 1, wherein determining the protocol signaling of to-be-processed sentence from the atomic procedure graph based on the signaling character string of the to-be-processed sentence comprises:

when a previous signaling character string of the signaling character string of the to-be-processed sentence matches first target protocol signaling, determining that the protocol signaling of the to-be-processed signaling is a next piece of protocol signaling of the first target protocol signaling in an atomic procedure to which the first target protocol signaling belongs; or
when a next signaling character string of the signaling character string of the to-be-processed sentence matches second target protocol signaling, determining that the protocol signaling of the to-be-processed sentence is a previous piece of protocol signaling of the second target protocol signaling in an atomic procedure to which the second target protocol signaling belongs.

8. The method according to claim 7, wherein the method further comprises:

when the previous signaling character string fails to match protocol signaling of the atomic procedure graph, and/or when the next signaling character string fails to match the protocol signaling of the atomic procedure graph, searching a target text for a target signaling character string based on a signaling type of the signaling character string of the to-be-processed sentence, wherein the target text is a text after the signaling character string of the to-be-processed sentence; and

when the target signaling character string matches third target protocol signaling, determining that the protocol signaling of the to-be-processed sentence is the third target protocol signaling.

9. The method according to claim 1, wherein determining the question template corresponding to the atomic procedure clause comprises:

replacing a signaling character string and the non-signaling entity in the atomic procedure clause with a mask character string, to obtain a query statement;
obtaining a candidate question template set corresponding to the atomic procedure;
selecting a candidate question template subset from the candidate question template set based on a quantity of signaling of the query statement, wherein a quantity of signaling of each candidate question template in the candidate question template subset is the same as the quantity of signaling of the query statement;
calculating, for each candidate question template in the candidate question template subset, a fuzzy matching score between the candidate question template and the query statement; and
determining that the question template corresponding to the atomic procedure clause is a candidate question template corresponding to a highest matching score.

10. The method according to claim 1, wherein generating the logical expression of the atomic procedure clause based on the logical expression template corresponding to the question template, the protocol signaling corresponding to the atomic procedure clause, and the non-signaling entity of the atomic procedure clause comprises:
filling the protocol signaling corresponding to the atomic procedure clause and the non-signaling entity of the atomic procedure clause into a slot of the logical expression template corresponding to the question template, to obtain the logical expression of the atomic procedure clause.

11. The method according to claim 1, wherein generating the logical expression of the to-be-processed sentence based on the logical expression of the at least one atomic procedure clause comprises:

when there are a plurality of atomic procedure clauses, obtaining an inter-sentence logical relationship between the plurality of atomic procedure clauses; and
generating the logical expression of the to-be-processed sentence based on the inter-sentence logical relationship between the plurality of atomic procedure clauses and logical expressions of the plurality of atomic procedure clauses.

12. The method according to claim 1, wherein the method further comprises:

when the fault determining text comprises a level identifier and a sentence of the fault determining text does not comprise a logical operation keyword, determining an inter-sentence logical relationship between all to-be-processed sentences based on the level identifier;
when the fault determining text does not comprise a level identifier and a sentence of the fault determining text comprises a logical operation keyword, determining an inter-sentence logical relationship between all to-be-processed sentences based on the logical operation keyword; or
when the fault determining text comprises a level identifier and a sentence of the fault determining text comprises a logical operation keyword, determining an inter-sentence logical relationship between all to-be-processed sentences based on the level identifier and the logical operation keyword; and
generating the logical expression of the fault determining text based on the logical expression of the to-be-processed sentence comprises:
generating the logical expression of the fault determining text based on the inter-sentence logical relationship between all the to-be-processed sentences and the logical expression of the to-be-processed sentence.

13. The method according to any one of claims 1 to 12, wherein the method further comprises:

extracting an atomic procedure diagram from a protocol document;
creating the atomic procedure graph based on the atomic procedure diagram of the protocol document, wherein the atomic procedure graph comprises an atomic procedure identifier and a signaling set corresponding to an atomic procedure;
obtaining a fault description sentence set from a fault document;
obtaining a question template corresponding to each fault description sentence in the fault description sentence set; and

when all signaling of a target question template belongs to a signaling set corresponding to a target atomic procedure, associating the target question template with an atomic procedure identifier of the target atomic procedure, wherein the target question template is any question template.

14. The method according to any one of claims 1 to 12, wherein the method further comprises:

receiving a log sent by a network device;
searching the fault knowledge graph for a target logical expression based on a signaling character string and a non-signaling entity that are comprised in the log; and
determining, based on an output result of the target logical expression, whether the log comprises a fault event.

15. A computing apparatus, comprising a module configured to perform the method according to any one of claims 1 to 14.

16. A computing apparatus, comprising a processor and an interface circuit, wherein the interface circuit is configured to receive a signal from another computing apparatus and transmit the signal to the processor, or send a signal from the processor to another computing apparatus, and the processor is configured to implement the method according to any one of claims 1 to 14 through a logic circuit or executing code instructions.

17. A computer-readable storage medium, wherein the storage medium stores a computer program or instructions; and when the computer program or the instructions are executed by a computing apparatus, the method according to any one of claims 1 to 14 is implemented.

18. A computer program product, wherein when the computer program product runs on a computer, the computer is enabled to perform the method according to any one of claims 1 to 14.

```
┌─────────────────────┐                    ┌──────────────┐
│  Fault determining  │─────────────┐      │              │
│        text         │          Question  │              │           ┌─────────────┐
└─────────────────────┘         template   │  Computing   │   Logical │    Fault    │   ┌───────────┐
                                Signaling   │  apparatus   │ expression│  knowledge  │   │   Fault   │
┌─────────────────────┐        interaction │              │           │    graph    │   │ detection │
│  Telecommunication  │         procedure   │              │           └─────────────┘   └───────────┘
│      knowledge      │─────────────┘      │              │
│     middleware      │                    └──────────────┘
└─────────────────────┘
```

FIG. 1

```
                           ┌──────────────────────────────────┐
                           │       Computing apparatus         │
                           │                                   │
┌─────────────┐            │      ┌─────────────────┐          │      ┌─────────────────┐
│             │    Log     │      │      Fault       │         │      │  Fault detection │
│   Network   │───────────►│      │    knowledge     │         │─────►│      result      │
│   device    │            │      │      graph       │         │      │                  │
│             │            │      └─────────────────┘          │      └─────────────────┘
└─────────────┘            │                                   │
                           └──────────────────────────────────┘
```

FIG. 2

**Construction of telecommunication knowledge middleware**

3GPP protocol → 301: Extract an atomic procedure diagram → 302: Generate an atomic procedure graph → Atomic procedure graph

Fault case → 303: Extract an atomic procedure clause → 304: Construct a question template → Question template library

305: Associate an atomic procedure with the question template

**Generation of a logical expression**

306: Text preprocessing

307: Logical sentence segmentation

| Embedded logic splitting | Inter-sentence nested logic parsing |

308: Parameter recognition

| Character string screening | Rule filtering |

309: Parameter linking

| Basic signaling matching | Multi-candidate matching processing |
| Fuzzy signaling matching | |

310: Question template matching

| Text segmentation | Non-signaling entity recognition |
| Query statement construction | Signaling-constrained fuzzy matching |

311: Generation of a logical expression of a fault determining text

| Slot filling of the question template | Logical expression combination |

FIG. 3

| MeNB | | en-gNB |
|---|---|---|

SGNB ADDITION REQUEST

SGNB ADDITION REQUEST ACKNOWLEDGE

FIG. 4

| Fault determining text | One of the following conditions is met:<br>1. 4G does not receive ACK within 5s after initiating SGNB add req, and the 4G sends SNB rel req carrying a cause value tDCoverall-expiry<br>2. 5G immediately returns SNB ADD ack, and the 5G sends SNB rel require carrying a cause value tDCoverall-expiry when the 5G does not receive a response message from 4G within 20s |
|---|---|
| Logical expression of the fault determining text | ((time(SGNB_ADD_REQ_ACK) – time(SGNB_ADD_REQ) > 5000 and (SGNB_REL_REQ:cause = = tDCoverall-expiry))<br>Or<br>((time(SGNB_RECFG_CMP) ‐ time(SGNB_ADD_REQ_ACK) > 20000 and (SGNB_REL_REQUIRED:cause = = tDCoverall-expiry)) |

FIG. 5

| Question template identifier | Question template |
|---|---|
| <TIME>REQ-ACK | [fail to receive/not receive/not receiving] <SIG:ACK> within <TIME> after [send/sending/initiate] <SIG:REQ> |
| <TIME>REQ-ACK | Delay between [receive/receiving/receives] <SIG:REQ> and [return/feed back] <SIG:ACK> is [less than/do not exceed/greater than/exceed] <TIME> |

FIG. 6

Obtain a to-be-processed sentence based on a fault determining text — 701

Obtain a signaling character string of the to-be-processed sentence — 702

Determine protocol signaling of the to-be-processed sentence from an atomic procedure graph based on the signaling character string of the to-be-processed sentence — 703

Determine, from the atomic procedure graph, an atomic procedure to which the protocol signaling of the to-be-processed sentence belongs — 704

Generate at least one atomic procedure clause based on the atomic procedure and the to-be-processed sentence — 705

Determine a question template corresponding to the atomic procedure clause — 706

Generate a logical expression of the atomic procedure clause based on a logical expression template corresponding to the question template, protocol signaling corresponding to the atomic procedure clause, and a non-signaling entity of the atomic procedure clause — 707

Generate a logical expression of the to-be-processed sentence based on the logical expression of the at least one atomic procedure clause — 708

Generate a logical expression of the fault determining text based on the logical expression of the to-be-processed sentence — 709

Add the logical expression of the fault determining text to a fault knowledge graph — 710

FIG. 7

| Embedded logical relationship recognition | A base station sends an NGAP_PDU_SESSION_RSRC_SETUP_RSP message or an NGAP_PDU_SESSION_RSRC_MODIFY_RSP message that carries a cause information element radio-connection-with-ue-lost21 |
|---|---|
| Sentence component analysis | A base station sends an **NGAP_PDU_SESSION_RSRC_SETUP_RSP** message or an **NGAP_PDU_SESSION_RSRC_MODIFY_RSP** message that carries a cause information element radio-connection-with-ue-lost21 |
| Sentence splitting and reassembling | 1. A base station sends an NGAP_PDU_SESSION_RSRC_SETUP_RSP message that carries a cause information element radio-connection-with-ue-lost21<br><br>2. A base station sends an NGAP_PDU_SESSION_RSRC_MODIFY_RSP message that carries a cause information element radio-connection-with-ue-lost21 |

FIG. 8

| Fault determining text | A determining method: One of the following two conditions is met:<br>1. Check 5G traffic statistics, N.QosFlow.FailEst.UeNoReply > 0<br>2. Check NG interface tracing. One of the following conditions is met:<br>(1) A base station sends an NGAP_PDU_SESSION_RSRC_SETUP_RSP message or an NGAP_PDU_SESSION_RSRC_MODIFY_RSP message that carries a cause information element radio-connection-with-ue-lost21<br>(2) A base station receives an NGAP_INIT_CONTEXT_SETUP_REQ message that carries a PDUSessionID information element, and the base station sends an NGAP_INIT_CONTEXT_SETUP_FAIL message that carries a cause information element radio-connection-with-ue-lost21 |
|---|---|
| Reassembled sentence | s1: Check 5G traffic statistics, N.QosFlow.FailEst.UeNoReply > 0<br>s2: A base station sends an NGAP_PDU_SESSION_RSRC_SETUP_RSP message that carries a cause information element radio-connection-with-ue-lost21<br>s3: A base station sends an NGAP_PDU_SESSION_RSRC_MODIFY_RSP message that carries a cause information element radio-connection-with-ue-lost21<br>s4: A base station receives an NGAP_INIT_CONTEXT_SETUP_REQ message that carries a PDUSessionID information element, and the base station sends an NGAP_INIT_CONTEXT_SETUP_FAIL message that carries a cause information element radio-connection-with-ue-lost21 |

FIG. 9

Atomic
procedure
clause

4G does not receive ACK within 5s after initiating SGN req

Query
statement

4G does not receive <SIG:ACK> within <TIME> after initiating
<SIG:REQ>

FIG. 10

Atomic
procedure
clause

4G does not receive **ACK** within **5s** after
initiating **SGN req**

Question
template

[fail to receive/not receive/not receiving] <SIG:ACK> within
<TIME> after [send/sending/initiate] <SIG:REQ>

Logical
expression
template
corresponding
to the question
template

((time(?) – (time(?)) > ?)

Slot filling

Logical
expression of
the atomic
procedure
clause

(time(SGNB_ADD_REQ_ACK) –
(time(SGNB_ADD_REQ)) > 5000)

FIG. 11

Computing
apparatus 1200

Obtaining module
1201

First matching
module 1202

Second matching
module 1203

Generation module
1204

FIG. 12

Computing apparatus 1300

Processor
1310

Interface circuit
1320

Memory 1330

FIG. 13

## INTERNATIONAL SEARCH REPORT

| International application No. |
| --- |
| **PCT/CN2024/077342** |

| A. | CLASSIFICATION OF SUBJECT MATTER |
| --- | --- |

G06F 16/36(2019.01)i

According to International Patent Classification (IPC) or to both national classification and IPC

| B. | FIELDS SEARCHED |
| --- | --- |

Minimum documentation searched (classification system followed by classification symbols)

IPC: G06F, H04L, H04W

Documentation searched other than minimum documentation to the extent that such documents are included in the fields searched

Electronic data base consulted during the international search (name of data base and, where practicable, search terms used)

CNTXT, DWPI, ENTXT, CNKI: 故障, 知识图谱, 文本, 字符串, 通信协议, 信令, 逻辑表达式, failure, knowledge w graph, text, string, communication, protocol, signaling, logical w expression

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | CN 115660083 A (CHINA UNITED NETWORK COMMUNICATIONS GROUP CO., LTD.) 31 January 2023 (2023-01-31) description, paragraphs [0067]-[0082] | | 1-18 |
| A | CN 114205852 A (PURPLE MOUNTAIN LABORATORIES FOR NETWORK AND COMMUNICATION SECURITY) 18 March 2022 (2022-03-18) entire document | | 1-18 |
| A | CN 114745743 A (NEW H3C TECHNOLOGIES CO., LTD.) 12 July 2022 (2022-07-12) entire document | | 1-18 |
| A | CN 115996169 A (BEIJING UNIVERSITY OF POSTS AND TELECOMMUNICATIONS et al.) 21 April 2023 (2023-04-21) entire document | | 1-18 |
| A | US 2021103256 A1 (INTELLIGENT FUSION TECHNOLOGY, INC.) 08 April 2021 (2021-04-08) entire document | | 1-18 |

☐ Further documents are listed in the continuation of Box C.   ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | |

| Date of the actual completion of the international search | Date of mailing of the international search report |
| --- | --- |
| **23 April 2024** | **30 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/077342** |

| Patent document cited in search report | | | Publication date (day/month/year) | Patent family member(s) | | | Publication date (day/month/year) |
| --- | --- | --- | --- | --- | --- | --- | --- |
| CN | 115660083 | A | 31 January 2023 | None | | | |
| CN | 114205852 | A | 18 March 2022 | WO | 2023155481 | A1 | 24 August 2023 |
| CN | 114745743 | A | 12 July 2022 | None | | | |
| CN | 115996169 | A | 21 April 2023 | None | | | |
| US | 2021103256 | A1 | 08 April 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310718965